(19) Europäisches Patentamt / European Patent Office / Office européen des brevets

(11) **EP 2 905 267 A1**

(12) **EUROPEAN PATENT APPLICATION**
published in accordance with Art. 153(4) EPC

(43) Date of publication:
**12.08.2015 Bulletin 2015/33**

(51) Int Cl.:
**C03C 27/12** *(2006.01)*  **C03C 3/087** *(2006.01)*

(21) Application number: **13844119.1**

(22) Date of filing: **24.09.2013**

(86) International application number:
**PCT/JP2013/075761**

(87) International publication number:
**WO 2014/054468 (10.04.2014 Gazette 2014/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.10.2012 JP 2012220711**

(71) Applicant: **Asahi Glass Company, Limited**
**Tokyo 100-8405 (JP)**

(72) Inventors:
• **TSUCHIYA, Masahiro**
**Tokyo 100-8405 (JP)**
• **KATO, Yasumasa**
**Tokyo 100-8405 (JP)**

• **KITAJIMA, Yutaka**
**Tokyo 100-8405 (JP)**
• **KASAJIMA, Masashi**
**Tokyo 100-8405 (JP)**
• **AKADA, Shuichi**
**Tokyo 100-8405 (JP)**
• **YAMAKAWA, Hiroshi**
**Tokyo 100-8405 (JP)**
• **TANAKA, Junji**
**Tokyo 100-8405 (JP)**

(74) Representative: **Müller-Boré & Partner**
**Patentanwälte PartG mbB**
**Friedenheimer Brücke 21**
**80639 München (DE)**

(54) **METHOD FOR PRODUCING LAMINATED GLASS**

(57)    [MEANS FOR SOLVING] A laminated glass production method including a forming step of bending a plurality of glass plates into a desired shape by heating the plurality of glass plates to near a softening point, a lamination step of stacking the plurality of bent glass plates in layers with an interlayer interposed therebetween, and a pressure bonding step of forming laminated glass by bonding the glass plates and the interlayer stacked in layers by applying pressure, wherein at least two glass plates of the plurality of glass plates composing the laminated glass have different thicknesses, a thicker glass plate of the two glass plates having different thicknesses has a viscosity lower than a viscosity of a thinner glass plate of the two glass plates at a temperature between an annealing point and a softening point of the thicker glass plate, and the forming step includes a temperature distribution forming step of forming an uneven temperature distribution on a principal surface of each of the glass plates.

FIG.2

## Description

TECHNICAL FIELD

The present invention relates to laminated glass production methods.

BACKGROUND ART

Laminated glass having two glass plates bent into a predetermined shape and an interlayer provided between the two glass plates has been widely used as window glass for automobiles. In general, the two glass plates have the same thickness. The interlayer is formed of resin such as polyvinyl butyral (PVB), and prevents broken glass from flying.

The gravity forming process, which heats and softens a glass plate by passing a ring-shaped lower mold (ring mold) supporting the glass plate from below through a heating furnace, thereby bending the glass plate into a shape following the ring mold with the force of gravity, is common as a forming method that bends a glass plate into a desired shape. The press process, which holds and presses a glass plate preliminarily formed with the force of gravity between a ring mold and a press mold (upper mold), thereby performing final forming, may be used.

According to these forming processes, generally, two glass plates are placed one over the other on a ring mold and are simultaneously bent. In this case, a release agent containing ceramic powder is provided between the two glass plates in advance.

In recent years, a study has been made of reduction of the thickness of laminated glass in order to reduce the weight of automobiles (see, for example, Patent Document 1). Patent Document 1 proposes making an outer glass plate of an automobile thicker than an inner glass plate of the automobile in consideration of a flying object such as a small stone externally colliding against the automobile.

The window glass for automobiles is formed into a curved shape convex toward the outside of a vehicle at the time of its attachment to the vehicle. Therefore, in the case of making the outer glass plate of the vehicle thicker than the inner glass plate of the vehicle, a thick glass plate and a thin glass plate are stacked in layers in this order on a ring mold, and are heated and softened so as to be bent into a shape convex downward.

[Prior Art Document]

[Patent Document]

[Patent Document 1] Japanese Laid-Open Patent Application No. 2003-55007

SUMMARY OF THE INVENTION

PROBLEMS TO BE SOLVED BY THE INVENTION

When the two glass plates are different in thickness, however, it is difficult to bend the two glass plates equally because the two glass plates are different in bendability, so that various problems occur.

For example, in the case of stacking a thick glass plate and a thin glass plate in layers in this order on a ring mold, the thin glass plate is likely to slump because the thin glass plate is more likely to deform than the thick glass plate. As a result, the thin glass plate is formed into a shape different from that of the thick glass plate, so that problems such as (1) and (2) below occur.

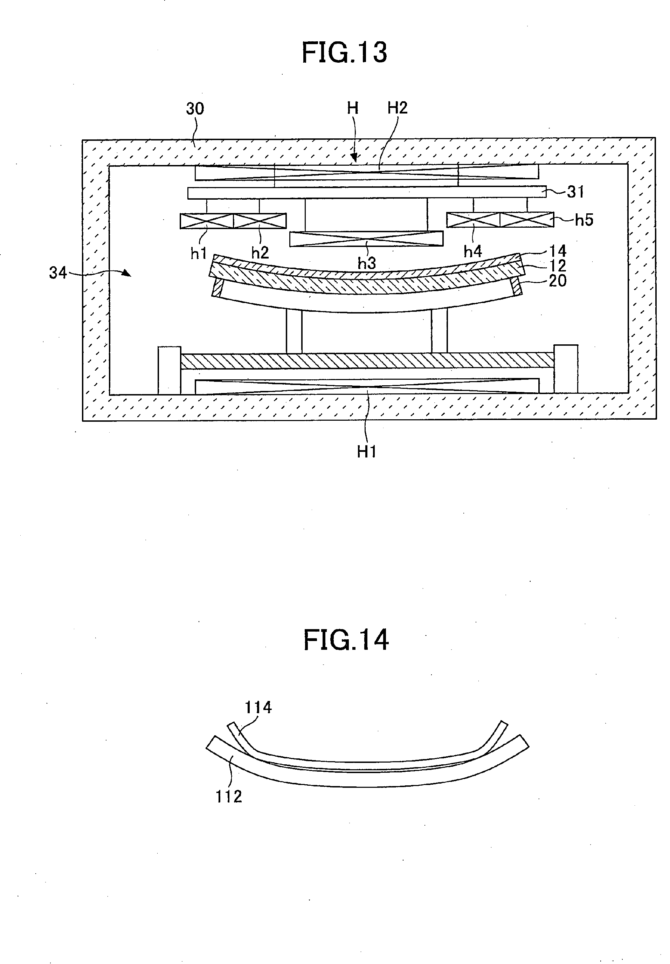

(1) The glass plates and the interlayer are not sufficiently pressure-bonded, thus resulting in pressure bonding failure.
(2) Irregularities due to a release agent are transferred onto the thick glass plate so as to remain as the deformation of the glass plates even after bending, thus resulting in poor visual quality. This deformation is likely to occur at longitudinal end portions of the thin glass plate. This is because a bent thin glass plate 114 is more likely to bend at longitudinal end portions (so-called boat-shaped cross section) than a bent thick glass plate 112 as illustrated in FIG. 14, so that the pressure of contact with the release agent concentrates on bent portions of the thin glass plate 114.

On the other hand, in order to equally bend two glass plates different in thickness, the two glass plates may be heated to different temperatures to be bent. In the case of stacking two glass plates in layers on a ring mold, however, it is difficult itself to cause the two glass plates to differ in temperature.

Furthermore, in the case of placing two glass plates different in thickness separately on different ring molds and bending the two glass plates separately, there is a disadvantage in light of productivity. Furthermore, a temperature distribution inside a heating furnace for heating the glass plates and the shape of the ring molds need to be adjusted depending on the thickness of the glass plates, thus causing the problem of difficulty in cost reduction.

The present invention is made in view of the above-described problems, and has a principal object of providing a laminated glass manufacturing method that makes it possible to accurately and easily bend glass plates different in thickness and to sufficiently bond glass plates and an interlayer by applying pressure in a pressure bonding process.

MEANS FOR SOLVING THE PROBLEMS

In order to achieve the above-described object, according to an embodiment of the present invention, a laminated glass production method is provided that includes a forming step of bending a plurality of glass plates into a desired shape by heating the plurality of glass plates to near a softening point, a lamination step of stacking the plurality of bent glass plates in layers with an interlayer interposed therebetween, and a pressure bonding step of forming laminated glass by bonding the glass plates and the interlayer stacked in layers by applying pressure, wherein at least two glass plates of the plurality of glass plates composing the laminated glass have different thicknesses, a thicker glass plate of the two glass plates having different thicknesses has a viscosity lower than a viscosity of a thinner glass plate of the two glass plates at a temperature between an annealing point and a softening point of the thicker glass plate, and the forming step includes a temperature distribution forming step of forming an uneven temperature distribution on a principal surface of each of the glass plates.

In this specification, of two glass plates of laminated glass that are different in thickness, the thicker glass plate is referred to as a thick glass plate and the thinner glass plate is referred to a thin glass plate.

EFFECTS OF THE INVENTION

According to an embodiment of the present invention, a laminated glass production method that makes it possible to accurately and easily bend glass plates different in thickness and to sufficiently bond glass plates and an interlayer by applying pressure in a pressure bonding process is provided.

BRIEF DESCRIPTION OF THE DRAWINGS

FIG. 1 is a diagram illustrating a forming process of a laminated glass production method according to an embodiment of the present invention, and is a vertical cross-sectional view of a heating furnace.
FIG. 2 is a cross-sectional view taken along II-II of FIG. 1.
FIG. 3 is a view taken from the direction of arrow III of FIG. 2, and is a diagram illustrating the positional relationship between glass plates and heat blocking members.
FIG. 4 is a diagram illustrating a lamination process of the laminated glass production method according to an embodiment of the present invention.
FIG. 5 is a side view of a glass laminate according to an embodiment of the present invention.
FIG. 6 is a side view of laminated glass according to an embodiment of the present invention.
FIG. 7 is a graph schematically illustrating the relationship between the viscosity and temperature of glass calculated based on the Fulcher equation.
FIG. 8 is a diagram illustrating viscosity measurement according to the BB method.
FIG. 9 is a graph illustrating the relationship between x and y that satisfy $D_1 = D_2$.
FIG. 10 is a graph illustrating the relationship between x and z that satisfy $D_1 = D_2$.
FIG. 11 is a graph illustrating the relationship between x and y that satisfy expressions (6) and (8).
FIG. 12 is a graph illustrating the relationship between x and y that satisfy expressions (7) and (9).
FIG. 13 is a diagram illustrating the forming process of the laminated glass production method according to a variation of the present invention, and is a vertical cross-sectional view of the heating furnace.
FIG. 14 is a schematic diagram illustrating unintentional deformation of a glass plate in a conventional forming process.

EMBODIMENT(S) FOR CARRYING OUT THE INVENTION

A description is given, with reference to the drawings, of embodiments for carrying out the present invention.

[Type of Glass Plates]

The type of glass of glass plates according to this embodiment is soda-lime glass. Soda-lime glass is glass

that contains $SiO_2$, CaO, $Na_2O$ and $K_2O$ as principal components. The type of glass of glass plates according to the present invention is not limited in particular, and may be, for example, alkali-free glass.

A thin glass plate and a thick glass plate that compose laminated glass according to this embodiment preferably have the glass compositions of the below-described first embodiment and second embodiment expressed as converted to oxides.

Here, "to" that indicates the below-described ranges of numerical values is used to mean that the numerical values described before and after it are included as a lower limit value and an upper limit value. In the specification, "to" is used hereinafter as meaning the same unless otherwise specified.

[First Embodiment]

The thin glass plate has a composition including:

$Al_2O_3$: 0 mass% to 3.5 mass%, and
$Na_2O$ and $K_2O$ in total: 12.0 mass% to 14.5 mass%.

The thick glass plate has a composition including:

$Al_2O_3$: 0 mass% to 2.0 mass%, and
$Na_2O$ and $K_2O$ in total: 13.0 mass% to 15.5 mass%.

The glass plates according to the above-described first embodiment may contain at least 65 mass% to 75 mass% of $SiO_2$ and 7 mass% to 14 mass% of CaO and contain $Al_2O_3$, $Na_2O$ and $K_2O$ of the above-described ranges.

[Second Embodiment]

The thin glass plate has a composition including:

$SiO_2$: 68.0 mass% to 75.0 mass%,
$Al_2O_3$: 0 mass% to 3.5 mass%,
CaO: 7.0 mass% to 13.0 mass%,
MgO: 0 mass% to 7.0 mass%,
$Na_2O$: 12.0 mass% to 15.0 mass%,
$K_2O$: 0 mass% to 3.0 mass%, and
$Na_2O$ and $K_2O$ in total: 12.0 mass% to 14.5 mass%.

The thick glass plate has a composition including:

$SiO_2$: 68.0 mass% to 75.0 mass%,
$Al_2O_3$: 0 mass% to 2.0 mass%,
CaO: 7.0 mass% to 13.0 mass%,
MgO: 0 mass% to 7.0 mass%,
$Na_2O$: 12.0 mass% to 15.0 mass%,
$K_2O$: 0 mass% to 3.0 mass%, and
$Na_2O$ and $K_2O$ in total: 13.0 mass% to 15.5 mass%.

$Al_2O_3$, which is a component that ensures weatherability, is preferably 1.7 mass% or more, and more preferably, 1.8 mass% or more. Furthermore, when $Al_2O_3$ exceeds 3.5 mass%, the viscosity becomes high so that melting may be difficult. From this viewpoint, $Al_2O_3$ is more preferably 3.3 mass% or less, and particularly preferably, 2.0 mass% or less.

$Na_2O$ is a component that improves meltability. When $Na_2O$ is less than 12.0 mass%, the meltability may be reduced. $Na_2O$ is more preferably 12.8 mass% or more, and particularly preferably, 13.0 mass% or more. Furthermore, when $Na_2O$ exceeds 15.0 mass%, the weatherability may be reduced. $Na_2O$ is more preferably 14.8 mass% or less, and particularly preferably, 13.8 mass% or less.

$K_2O$, which is a component that improves meltability, is preferably 0.5 mass% or more, and more preferably, 0.9 mass% or more. Furthermore, when $K_2O$ exceeds 3.0 mass%, the weatherability may be reduced, and the cost of glass plates increases. $K_2O$ is more preferably 1.8 mass% or less, and particularly preferably, 1.6 mass% or less.

The compositions of glass plates may be measured by X-ray fluorescence analysis.

[Laminated Glass Production Method]

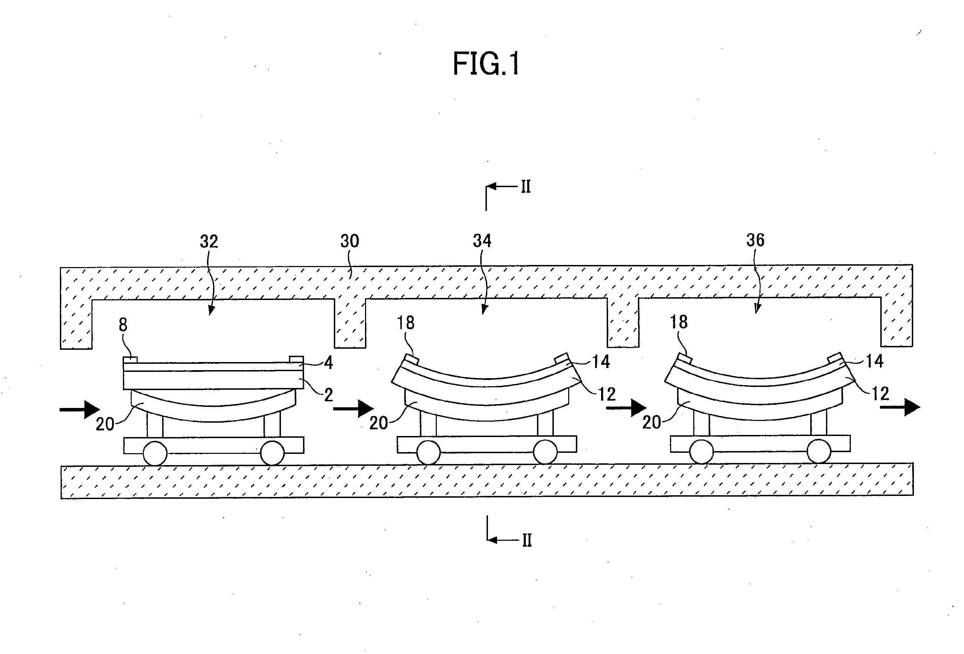

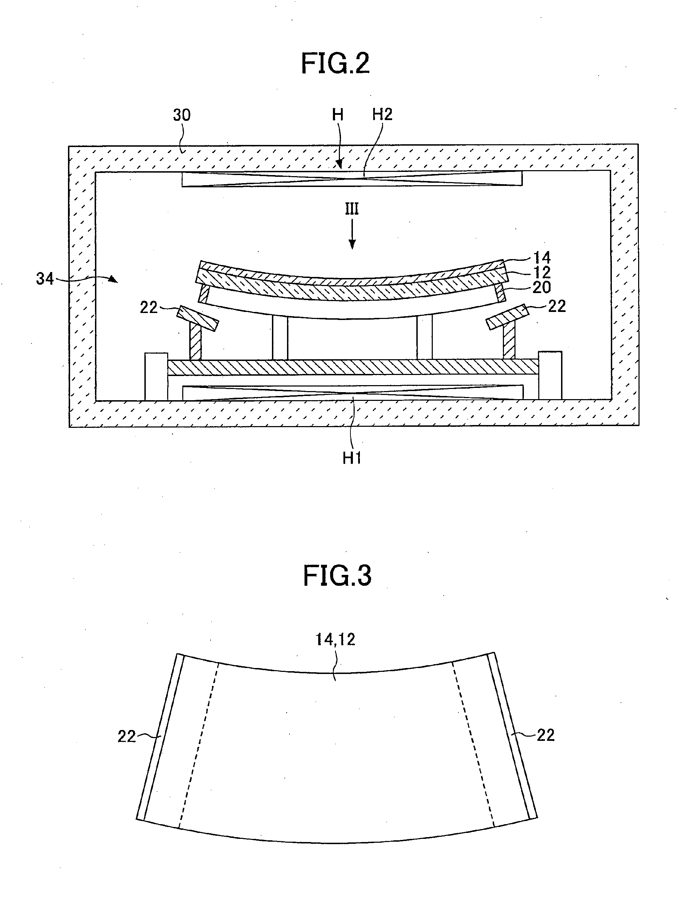

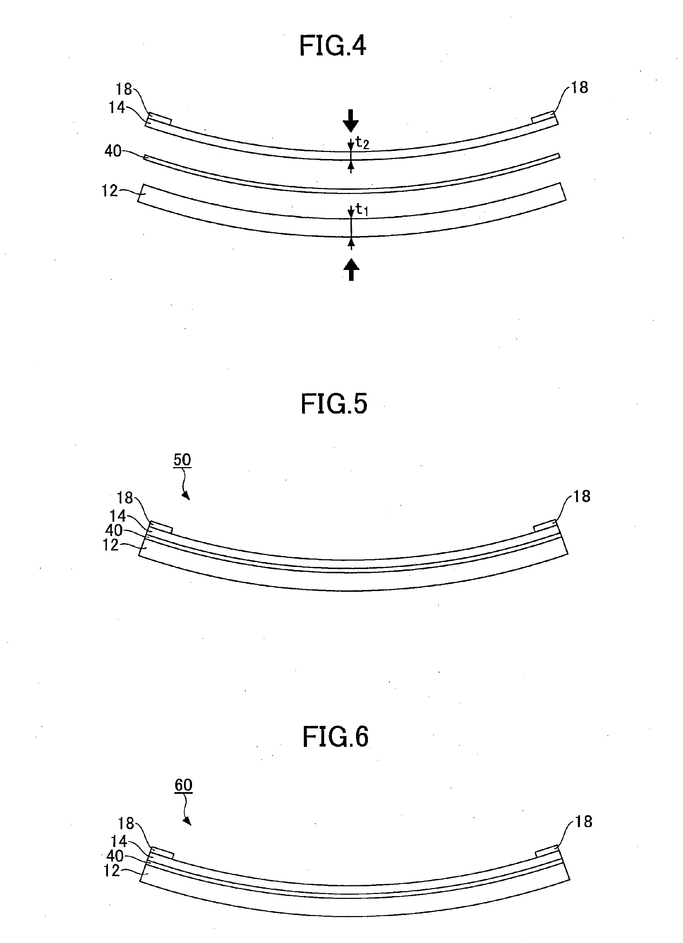

FIG. 1 is a diagram illustrating a forming process of a laminated glass production method according to an embodiment of the present invention, and is a vertical cross-sectional view of a heating furnace. In FIG. 1, the graphical representation of a heating apparatus and heat blocking members illustrated in FIG. 2 is omitted. FIG. 2 is a cross-sectional view taken along II-II of FIG. 1. FIG. 3 is a view taken from the direction of arrow III of FIG. 2, and is a diagram illustrating the positional relationship between glass plates and heat blocking members. FIG. 4 is a diagram illustrating a lamination process of the laminated glass production method according to an embodiment of the present invention. FIG. 5 is a side view of a glass laminate according to an embodiment of the present invention. FIG. 6 is a side view of laminated glass according to an embodiment of the present invention.

The laminated glass production method includes a forming process, a lamination process, and a pressure bonding process, and of the multiple glass plates that compose laminated glass, at least two glass plates differ in thickness. The thickness and glass composition of each of the multiple glass plates and the thickness ratio of the multiple glass plates hardly change over each of the processes such as the forming process.

The forming process is the process of heating multiple glass plates different in thickness to near the softening point of a glass plate having a higher softening point, that is, a thinner glass plate, and bending them into a predetermined shape predetermined by a blueprint or CAD data. In the forming process, for example, the gravity forming process, which heats and softens glass plates by passing the glass plates placed on a ring mold through a heating furnace, thereby bending the glass plates into a desired shape with the force of gravity, is used. The press process, which holds and presses glass plates preliminarily formed with the force of gravity between a ring mold and a press mold (upper mold), thereby performing final forming, may alternatively be used.

Apart from these, a process in which glass plates heated to a predetermined temperature while being conveyed horizontally over multiple rolls provided in a heating furnace are lifted up with a ring mold and are brought near to a bending mold (upper mold) so as to be formed into a shape following the bending mold may also be used.

In the forming process, commonly, multiple glass plates 2 and 4 are placed one over the other with a release agent present between them on a ring mold 20 and are bent simultaneously as illustrated in FIG. 1, for example. The multiple glass plates 2 and 4 placed on the ring mold 20 are vertically arranged, and the release agent is provided between the adjacent glass plates.

The release agent separates the adjacent glass plates so as to facilitate their separation after forming. As the release agent, for example, ceramic powder or the like, which does not react with glass plates or melt at high temperatures, is suitably used.

The multiple glass plates 2 and 4 placed on the ring mold 20 according to the gravity forming process may include two glass plates different in thickness and the thicker glass plate may be placed lower. When the number of glass plates placed on the ring mold 20 is three or more and there are glass plates equal in thickness, the glass plates equal in thickness are placed next to each other.

Alternatively, of the multiple glass plates 2 and 4 placed on the ring mold 20, the thinner glass plate may be placed lower. In this case, by stacking the bent glass plates 12 and 14 in layers with their vertical positions reversed, it is possible to prevent irregularities of the glass plate 14 that are marks of contact with the ring mold 20 from being exposed to the outside. Furthermore, even in the case where a slight difference results or is intentionally caused in formability between the multiple glass plates 2 and 4, by changing the vertical positions of the glass plates 2 and 4 as desired, it is possible to select an optimum forming procedure based on the bendability of the multiple glass plates.

In the forming process, the multiple glass plates 2 and 4 may be placed separately on different ring molds 20 and be bent separately. In this case, the release agent is unnecessary. In this case, changing a temperature distribution inside a heating furnace 30 and using different ring molds 20 in accordance with the thickness of the glass plates have been required, but are not necessary according to this embodiment. As described in detail below, this is because a thick plate and a thin plate have substantially the same bendability in the temperature range of forming.

The ring mold 20 is a support mold that is formed into a ring shape and supports the multiple (for example, two) glass plates 2 and 4 from below. The ring mold 20 is guided in a desired direction along rails inside the heating furnace 30. The interior of the heating furnace 30 is divided into multiple zones such as a pre-heating zone 32 for pre-heating glass plates, a forming zone 34 for bonding glass plates, and an annealing zone 36 for annealing glass plates. Each divisional zone may be subdivided by the approximate size of the ring mold 20. Each zone is provided with a heating apparatus H (see FIG. 2) in order to control the temperature of each zone. The heating apparatus H may include multiple heating sources (such as heaters) H1 and H2 and heat the glass plates 2 and 4 (12 and 14) placed on the ring mold 20 from both above and below. The heating apparatus H may not only heat the glass plates 2 and 4 from both above and below but also heat the glass plates 2 and 4 from the side.

The ring mold 20 passes through the pre-heating zone 32, the forming zone 34, and the annealing zone 36 in this order. The temperature of the forming zone 34 is set to a temperature suitable for bending glass plates (normally, 550°C to 650°C), and the glass plates are bent into a shape following the ring mold 20 in the forming zone 34. At this point, the ring mold 20 may be heated while moving continuously through the zones of the heating furnace 30 or may be heated while moving discontinuously, stopping at each zone.

The ring mold 20 is formed into a frame shape, and supports peripheral parts of glass plates. The ring mold 20 may have a one-piece body or may be circumferentially divided. In the latter case, multiple divisional bodies forming the ring mold may be moved or rotated relative to each other as required in order to obtain a desired shape. Furthermore, ring molds that partially differ in curvature may be placed in parallel to overlap each other and be interchanged in accordance with the degree of bending of glass plates to serve as a supporting ring.

Thus, in the forming process, the multiple glass plates 2 and 4 having a flat plate shape are bent, so that the multiple glass plates 12 and 14 having a desired shape are obtained. After being sufficiently cooled, the multiple obtained glass plates 12 and 14 are cleaned as required (for example, in order to remove the release agent) and are subjected to the lamination process.

The lamination process is the process of stacking the multiple bent glass plates 12 and 14 in layers with an interlayer 40 interposed between them as illustrated in FIG. 4. By this process, a glass laminate (non-pressure-bonded body) 50 is obtained as illustrated in FIG. 5. The glass laminate 50 includes the two glass plates 12 and 14 different in thickness. In the specification, the glass laminate refers to a non-pressure-bonded laminate having multiple glass plates stacked in layers with an interlayer interposed between them before the pressure bonding process, and is distinguished from laminated glass obtained via the pressure bonding process.

The interlayer 40 is formed of resin such as polyvinyl butyral (PVB) and is provided between the adjacent glass plates 12 and 14. The interlayer 40 prevents broken glass from flying when below-described laminated glass 60 is broken.

In the lamination process, multiple (for example, two) glass plates 12 and 14 that match in shape may be selected from multiple bent glass plates and be stacked in layers. For example, each of the multiple glass plates 12 and 14 simultaneously bent on the single ring mold 20 may be used to produce laminated glass by being pressure-bonded to a glass plate of a different pair.

In the lamination process, in order to facilitate removal of air between the glass plates 12 and 14 and the interlayer 40 to prevent poor pressure bonding of the glass plates and the interlayer, it is desirable that the two glass plates 12 and 14 to be stacked in layers be stacked in layers so that a concave curved surface of the glass plate 12 having a large radius of curvature and a convex curved surface of the glass plate 14 having a small radius of curvature face each other. Here, the "convex curved surface" refers to a projecting curved surface of a glass plate, and the "concave curved surface" refers to a depressed curved surface of a glass plate. There is little difference in the radius of curvature between the two glass plates 12 and 14.

In the lamination process, the multiple glass plates 12 and 14 different in thickness are vertically arranged and stacked in layers so that a thicker glass plate is disposed closer to a convex curved surface of the glass laminate 50. As a result, when the laminated glass 60 is attached to a vehicle body as window glass for automobiles, a thicker glass plate is disposed closer to the exterior side of the vehicle. Therefore, it is possible to improve the durability against external impact to the vehicle, such as a flying stone.

The pressure bonding process is the process of forming the laminated glass 60 as illustrated in FIG. 6 by bonding the glass plates 12 and 14 and the interlayer 40 stacked in layers by applying pressure. The laminated glass 60 is obtained by placing in an autoclave, heating, and bonding by applying pressure the glass laminate 50 obtained in the lamination process, and has a desired curved shape.

Besides the above-described forming process, lamination process and pressure bonding process, the laminated glass production method may further include a formation process of forming a functional material layer 8 (see FIG. 1) on a surface of a glass plate. Functional materials are not limited in particular, and may be, for example, electrically conductive materials such as metal materials and decoration materials such as heat-resisting pigments. Multiple functional material layers 8 may be simultaneously provided.

In the formation process, the functional material layer 8 is formed by applying ink containing a binder and a solvent besides a functional material on a surface of a single glass plate and drying the ink. Multiple kinds of functional material layers 8 may be formed on a surface of a single glass plate. The functional material layer 8 is formed in a desired pattern.

The formation process may be performed before the forming process. In this case, it is possible to apply ink on a flat glass surface. Accordingly, the application workability is good. Examples of ink application methods include screen printing and die coating.

When fired, the functional material layer 8 is baked onto the surface of the glass plate so as to become a functional film 18 containing a functional material (see FIG. 1). The functional film 18 is, for example, an electrically conductive film containing an electrically conductive material, or an electrically conductive wire, and forms an antenna that receives radio waves of TV broadcasting, AM and FM broadcasting, or PHS, or a heating electric wire for anti-icing. Alternatively, the functional film 18 is a decoration film containing a decoration material and contains a black heat-resisting pigment so as to restrict visibility from outside and restrict transmission of sunlight.

[Details of Laminated Glass Production Method]

According to this embodiment, of the multiple glass plates 12 and 14 composing the laminated glass 60, at least two glass plates 12 and 14 are different in thickness. The example illustrated in FIG. 5 and FIG. 6 is laminated glass that includes two glass plates. The two glass plates 12 and 14 (that is, the glass plates 2 and 4) that differ in thickness have different viscosities. The thick glass plate 12 has a lower viscosity than the thin glass plate 14 at any temperature between the annealing point and the softening point of the thick glass plate 12. That is, when compared at the same temperature, the thick glass plate 12 has a lower viscosity than the thin glass plate 14.

Here, "the principal surfaces of a glass plate" refers to surfaces other than surfaces along the thickness directions of the glass plate (so-called edge surfaces), that is, top and bottom surfaces. The same applies in the case where multiple glass plates are stacked in layers. For example, in FIG. 2, the principal surfaces are the upper and lower surfaces of the glass plates 12 and 14, and an uneven temperature distribution is formed on each principal surface. At this point, an uneven temperature distribution may be formed on surfaces (edge surfaces) other than the principal surfaces as well, depending on the temperature distribution of the nearby principal surface.

Here, the "annealing point" refers to a temperature at which the viscosity of glass becomes $10^{13}$ dPa·s, and is determined by the composition of glass, etc. The annealing point of soda-lime glass is typically approximately 550°C. Glass plates hardly deform thermally at temperatures below the annealing point.

Furthermore, the "softening point" refers to a temperature at which the viscosity of glass becomes $10^{7.65}$ dPa·s, and is determined by the composition of glass, etc. The softening point of soda-lime glass is typically approximately 750°C. The bending temperature of glass plates is set at the same temperature as the softening point or a temperature slightly lower than the softening point.

With the temperature of glass being the same, the viscosity of glass depends on the composition of glass, the $\beta$-OH value ($mm^{-1}$) that represents a moisture content, etc. In the case of soda-lime glass, for example, as the content of alkali metal oxides (such as $Na_2O$ and $K_2O$) in the glass decreases and the $\beta$-OH value ($mm^{-1}$) decreases, the viscosity increases.

The $\beta$-OH value ($mm^{-1}$) is an index of the moisture content of glass. The $\beta$-OH value ($mm^{-1}$) of glass may be determined by measuring the absorbance of a glass sample relative to light of a wavelength of 2.75 $\mu$m to 2.95 $\mu$m and dividing its maximum value $\beta$max by the thickness (mm) of the sample.

Furthermore, the $\beta$-OH value ($mm^{-1}$) of a glass plate varies depending on the amount of moisture in a raw material, the type of a heat source (for example, heavy oil, LNG, electricity or the like) that melts the raw material, a vapor concentration in a melter, and the residence time of molten glass in the melter, etc., and is preferably controlled by using a method employing a hydroxide instead of an oxide as a raw material of glass (for example, employing magnesium hydroxide ($Mg(OH)_2$) instead of magnesium oxide (MgO)).

According to this embodiment, the moisture content of a glass plate is, for example, 0.1 to 0.4, and preferably, 0.2 to 0.3 in $\beta$-OH value ($mm^{-1}$).

With the composition of glass being the same, the viscosity of glass decreases as the temperature of glass increases. With the composition of glass being the same, the viscosity of glass is expressed by Eq. (1) below. Equation (1) below is commonly referred to as the Fulcher equation.

$$\log_{10} \eta = A + \frac{B}{T - T_0} , \tag{1}$$

where $A = \log_{10} \eta_0$.

In Eq. (1), $\eta$ represents glass viscosity (dPa·s), and T represents glass temperature (°C). Furthermore, A, $\eta_0$ (dPa·s), B (°C), and $T_0$ (°C) indicate constants determined in accordance with the composition of glass, etc.

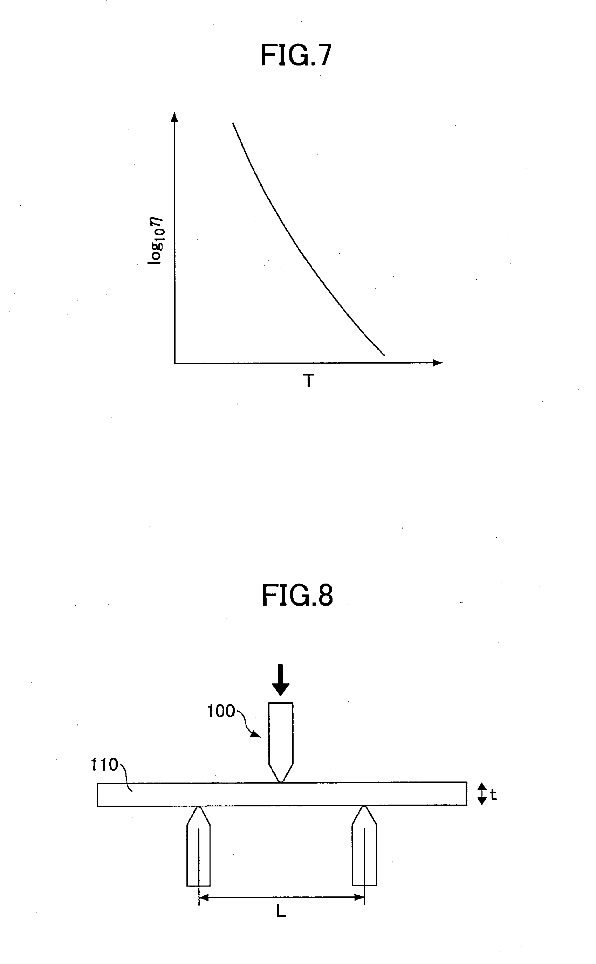

FIG. 7 is a graph schematically illustrating the relationship between the viscosity and temperature of glass calculated based on the Fulcher equation. In FIG. 7, the vertical axis is the logarithm of the value of glass viscosity $\eta$ (to the base 10), and the horizontal axis is the value of glass temperature T. As illustrated in FIG. 7, with the composition of glass being the same, $\eta$ decreases as T increases.

The viscosity of glass at a desired temperature is measured by the so-called beam bending method (hereinafter referred to as "BB method"). The BB method is a measurement method suitable for measuring viscosity at a desired temperature between the annealing point and the softening point.

FIG. 8 is a diagram illustrating viscosity measurement according to the BB method. As illustrated in FIG. 8, the viscosity measurement according to the BB method employs a three-point bending testing machine 100. A test piece 110 of 50 mm in length and 2 mm in thickness is horizontally supported by two support points (distance L = 20 mm), and is heated to a desired temperature. Thereafter, a certain load (40 gf) is applied to the longitudinal center of the test piece 110, and the rate of deflection at the longitudinal center of the test piece is measured. Here, the "rate of deflection" means the rate of vertical displacement. Next, the viscosity of glass at a desired temperature is calculated by assigning the measurement result of the rate of deflection, etc., to below-described Eq. (2).

$$\eta = \frac{G \times L^3}{2.4 \times I \times v} \times \left\{ M + \frac{\rho \times S \times L}{1.6} \right\} . \qquad (2)$$

In Eq. (2), $\eta$ represents glass viscosity (dPa·s), G represents gravitational acceleration (cm/sec$^2$), L represents the distance (cm) between the two support points, I represents the second moment of area (cm$^4$) of the test piece, v represents the rate of deflection (cm/min) at the center of the test piece, M is a load (g) applied to the longitudinal center of the test piece, p represents glass density (g/cm$^3$), and S represents the cross-sectional area (cm$^2$) of the test piece.
Equation (2) is transformed to obtain Eq. (3) as follows:

$$v = \frac{G \times L^3}{2.4 \times I \times \eta} \times \left\{ M + \frac{\rho \times S \times L}{1.6} \right\} . \qquad (3)$$

As shown in Eq. (3), the rate of deflection of glass increases as the viscosity of glass decreases.
According to this embodiment, as described above, the two glass plates 12 and 14 (that is, the glass plates 2 and 4) that are different in thickness have different glass viscosities, and the thick glass plate 12 has a lower viscosity than the thin glass plate 14 at any temperature between the annealing point and the softening point of the thick glass plate 12. Therefore, it is possible to compensate for the difference in thickness by the difference in viscosity, so that it is possible to accurately and easily bend the two glass plates 12 and 14 different in thickness.
As an index representing the bendability of a glass plate of t (mm) in thickness, it is possible to use the total amount of deflection of the test piece 110 of t (mm) in thickness at the time of increasing the temperature of the test piece 110 from 400°C to 630°C with a certain load (50 gf) being applied to the test piece 110 using the three-point bending testing machine 100 illustrated in FIG. 8. Letting this total amount of deflection be D (cm), D is calculated from Eq. (4) below. The temperature at which the temperature increase of the test piece 110 starts is determined to be 400°C because the thermal deformation of the test piece is negligibly small at temperatures lower than or equal to 400°C. The test piece and the glass plate have the same glass composition and the same A ($\eta_0$), B and $T_0$.

$$D = \int_{400}^{630} \frac{v}{E} \times dT . \qquad (4)$$

In Eq. (4), T indicates the temperature of the test piece, E indicates the rate of temperature increase (°C/min) from 400°C to 630°C and is determined to be 10 (°C/min), and v indicates the rate of deflection (cm/min) of the test piece, and is a function with T serving as a variable and expressed by Eq. (5) as follows:

$$v = \frac{G \times L^3}{2.4 \times I \times \eta_0 \times 10^{\frac{B}{T-T_0}}} \times \left\{ M + \frac{\rho \times S \times L}{1.6} \right\} . \qquad (5)$$

Equation (5) is obtained by assigning Eq. (1) to Eq. (3), and L and I are determined by t and so on. Values at room temperature are used for L and I because their dependence on temperature is negligibly small.
Letting the values of D and $T_0$ of a thick test piece (t = $t_1$) be $D_1$ and $T_1$ and letting the values of D and $T_0$ of a thin test piece (t = $t_2$ < $t_1$) be $D_2$ and $T_2$, $\Delta T$ ($\Delta T = T_2 - T_1$) that satisfies $D_1 = D_2$ is shown in Table 1. Furthermore, letting the thickness ratio of the two test pieces be x, letting the ratio of the logarithms of the viscosities of the two test pieces at the annealing point of the thick test piece (t = $t_1$) be y, and letting the ratio of the logarithms of the viscosities of the two test pieces at the softening point of the thick test piece (t = $t_1$) be z, the combination of x, y and z that satisfies $D_1 = D_2$ is shown in Table 1. The values of y and z are calculated by assigning $\Delta T$, etc., shown in Table 1 to Eq. (4) (specifically, Eq. (5)).

Table 1

| | $t_1$(mm) | $t_2$(mm) | $\Delta T$(°C) | x | y | z | $D_2/D_1$ |
|---|---|---|---|---|---|---|---|
| Ex. 1 | 2.0 | 1.6 | 8 | 0.80 | 1.033 | 1.022 | 1 |

(continued)

|  | $t_1$(mm) | $t_2$(mm) | $\Delta T$(°C) | x | y | z | $D_2/D_1$ |
|---|---|---|---|---|---|---|---|
| Ex. 2 | 2.0 | 1.1 | 21 | 0.55 | 1.092 | 1.058 | 1 |
| Ex. 3 | 1.9 | 1.7 | 4 | 0.89 | 1.016 | 1.011 | 1 |
| Ex. 4 | 1.8 | 1.3 | 12 | 0.72 | 1.051 | 1.033 | 1 |
| Ex. 5 | 1.8 | 1.1 | 18 | 0.61 | 1.078 | 1.050 | 1 |
| Ex. 6 | 2.1 | 1.6 | 10 | 0.76 | 1.042 | 1.027 | 1 |
| Ex. 7 | 2.1 | 1.1 | 23 | 0.52 | 1.101 | 1.064 | 1 |
| Ex. 8 | 1.9 | 1.25 | 15 | 0.66 | 1.064 | 1.041 | 1 |
| Ex. 9 | 2.1 | 0.7 | 37 | 0.33 | 1.172 | 1.107 | 1 |

In Table 1, the values of A and B of the two test pieces are typical values of soda-lime glass, and specifically, A was 1.525 and B was 4144 (°C). Furthermore, the value of $T_1$ of the thick test piece (t = $t_1$) is a typical value of soda-lime glass, and specifically, $T_1$ was 270.6 (°C). The values of A and B were constant and $T_0$ alone was adjusted as described above because A and B depend less on the composition of glass than $T_0$.

In Table 1, the value of x indicates the ratio ($t_2/t_1$) of the thickness ($t_1$) of the thick test piece and the thickness ($t_2$) of the thin test piece at room temperature. The value of y indicates the ratio ($\log_{10}\eta_2/\log_{10}\eta_1$) of the logarithm ($\log_{10}\eta_1$) of the viscosity ($\eta_1$) of the thick test piece and the logarithm ($\log_{10}\eta_2$) of the viscosity ($\eta_2$) of the thin test piece at the annealing point of the thick test piece. The value of z indicates the ratio (($\log_{10}\eta_4/\log_{10}\eta_3$) of the logarithm ($\log_{10}\eta_3$) of the viscosity ($\eta_3$) of the thick test piece and the logarithm ($\log_{10}\eta_4$) of the viscosity ($\eta_4$) of the thin test piece at the softening point of the thick test piece.

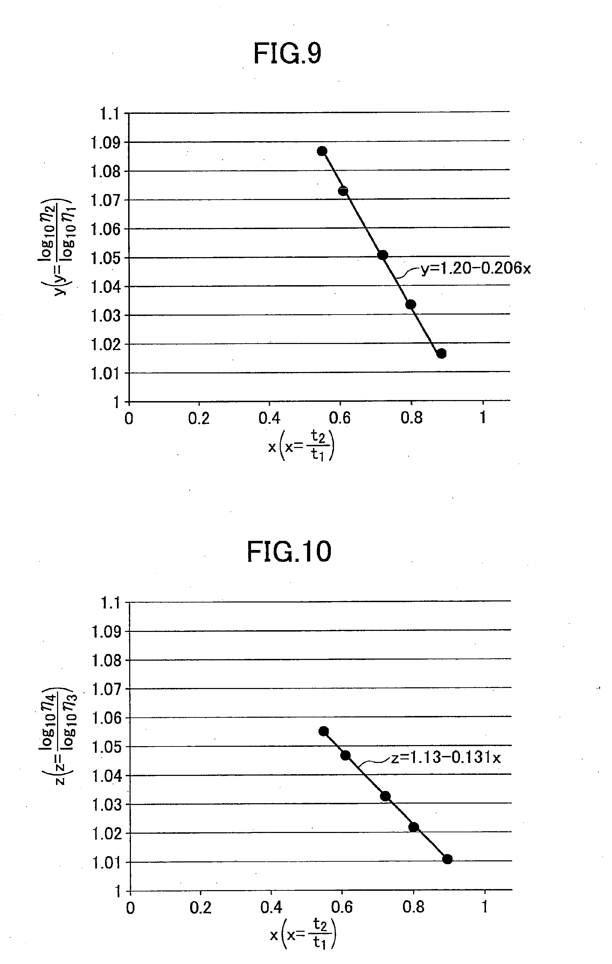

FIG. 9 is a graph illustrating the relationship between x and y that satisfy $D_1 = D_2$. FIG. 10 is a graph illustrating the relationship between x and z that satisfy $D_1 = D_2$.

As illustrated in FIG. 9, x and y that satisfy $D_1 = D_2$ have a substantially proportional relationship. The relationship between x and y determined by the method of least squares is expressed by y = 1.20 - 0.206 × x.

As illustrated in FIG. 10, x and z that satisfy $D_1 = D_2$ have a substantially proportional relationship. The relationship between x and z determined by the method of least squares is expressed by z = 1.13 - 0.131 × x.

Then, in order to be equal in bendability in the forming process, the two glass plates 12 and 14 (that is, the glass plates 2 and 4) that are different in thickness desirably satisfy the following expressions (6) and (7):

$$1 < y < b_1 - 0.206 \times x \, , \qquad\qquad (6)$$

and

$$1 < z < c_1 - 0.131 \times x \, . \qquad\qquad (7)$$

In the expressions (6) and (7), x, y and z have the same meanings as in Table 1, and x indicates the thickness ratio of the two glass plates 12 and 14 at room temperature, y indicates the ratio of the logarithms of the viscosities of the two glass plates 12 and 14 at the annealing point of the thick glass plate 12, and z indicates the ratio of the logarithms of the viscosities of the two glass plates 12 and 14 at the softening point of the thick glass plate 12.

In the expressions (6) and (7), $b_1$ is 1.22 and $C_1$ is 1.15. In the case where y ≥ by - 0.206 × x and/or z ≥ $C_1$ - 0.131 × x, the amount of bending of the thick glass plate is excessively greater than the amount of bending of the thin glass plate in the forming process. Therefore, when the two glass plates are stacked in layers so that the concave curved surface of the thick glass plate and the convex curved surface of the thin glass plate face each other, the pressure bonding between the two glass plates is likely to be insufficient. Preferably, $b_1$ is 1.21, and more preferably, 1.20. Preferably, $c_1$ is 1.14, and more preferably, 1.13.

It is more desirable that the two glass plates different in thickness satisfy below-described expressions (8) and (9) in addition to the above-described expressions (6) and (7). The expression (8), however, is effectively used only when x is somewhat small, and specifically, is effectively used only when $1 \leq b_2 - 0.206 \times x$. Likewise, the expression (9) is effectively used only when x is somewhat small, and specifically, is effectively used only when $1 \leq c_2 - 0.131 \times x$.

$$b_2 - 0.206 \times x < y, \qquad\qquad (8)$$

and

$$c_2 - 0.131 \times x < z. \qquad\qquad (9)$$

In the expressions (8) and (9), $b_2$ is 1.11 and $c_2$ is 1.06. By determining that $y > b_2 - 0.206 \times x$ and $z > c_2 - 0.131 \times x$, it is possible to cause the two glass plates to sufficiently match in the amount of bending in the forming process even when x is small. Preferably, $b_2$ is 1.12, and more preferably, 1.13. Preferably, $c_2$ is 1.07, and more preferably, 1.08.

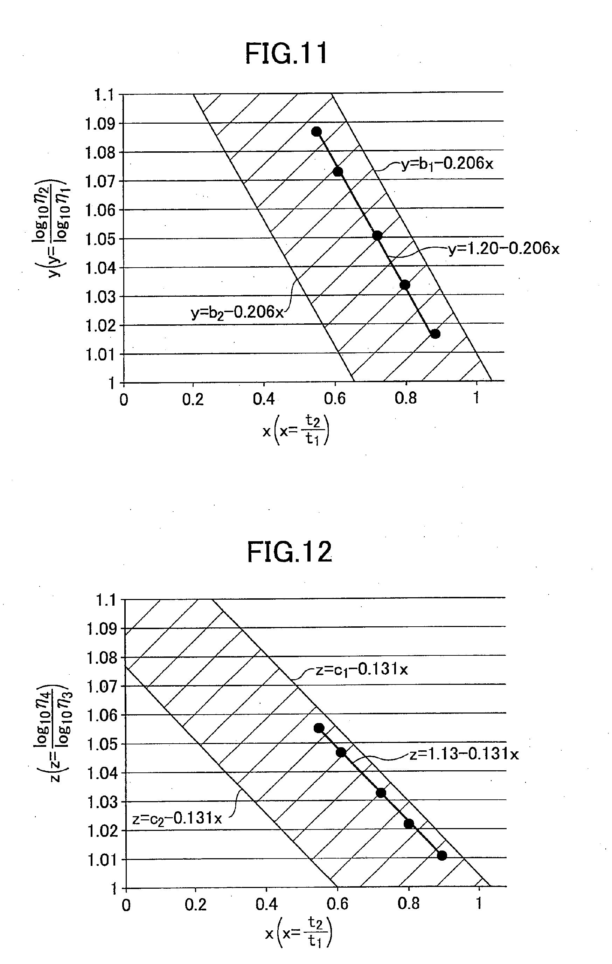

FIG. 11 is a graph illustrating the relationship between x and y that satisfy the expressions (6) and (8). In FIG. 11, a region that satisfies the expressions (6) and (8) is indicated by oblique lines. Furthermore, in FIG. 11, the relationship between x and y illustrated in Table 1 is plotted. As illustrated in FIG. 11, the expression (8) is effective only when x is somewhat small.

FIG. 12 is a graph illustrating the relationship between x and y that satisfy the expressions (7) and (9). In FIG. 12, a region that satisfies the expressions (7) and (9) is indicated by oblique lines. Furthermore, in FIG. 12, the relationship between x and z illustrated in Table 1 is plotted. As illustrated in FIG. 12, the expression (9) is effective only when x is somewhat small.

For comparison with Table 1, $D_2/D_1$ and $\Delta T$ in the case where the combination of x, y and z does not satisfy at least one of the expressions (6) through (9) are shown in Table 2.

Table 2

|       | $t_1$(mm) | $t_2$(mm) | $\Delta T$(°C) | x | y | z | $D_2/D_1$ |
|-------|-----------|-----------|----------------|------|---|---|-----------|
| Ex. 1 | 2.0 | 1.6 | 0 | 0.80 | 1 | 1 | 1.95 |
| Ex. 2 | 2.0 | 1.1 | 0 | 0.55 | 1 | 1 | 6.01 |
| Ex. 3 | 1.9 | 1.7 | 0 | 0.89 | 1 | 1 | 1.40 |
| Ex. 4 | 1.8 | 1.3 | 0 | 0.72 | 1 | 1 | 2.65 |
| Ex. 5 | 1.8 | 1.1 | 0 | 0.61 | 1 | 1 | 4.38 |
| Ex. 6 | 2.1 | 1.6 | 0 | 0.76 | 1 | 1 | 2.26 |
| Ex. 7 | 2.1 | 1.1 | 0 | 0.52 | 1 | 1 | 6.96 |
| Ex. 8 | 1.9 | 1.25 | 0 | 0.66 | 1 | 1 | 3.51 |
| Ex. 9 | 2.1 | 0.7 | 0 | 0.33 | 1 | 1 | 26.98 |

In Table 2, $b_1$ is 1.20, $c_1$ is 1.13, $b_2$ is 1.13, and $c_2$ is 1.08.

It is desirable that the two glass plates 12 and 14 (that is, the glass plates 2 and 4) that are different in thickness satisfy the expression of $0.3 \leq x \leq 0.9$. By causing x to be 0.9 or less, it is possible to sufficiently reduce the thickness of the laminated glass 60 while maintaining the strength and the flying stone resistance performance of the thick glass plate 12 (glass plate on the vehicle exterior side). Furthermore, by causing x to be 0.3 or more, it is possible to ensure sufficient strength of the thin glass plate 14. In terms of the balance between weight reduction due to thickness reduction and the strength of a glass plate on the vehicle exterior side against flying stones or the like, which satisfies safety standards in developed countries, $0.3 \leq x \leq 0.76$ is more preferable, and $0.33 \leq x \leq 0.66$ is still more preferable. At this point, in the case of soda-lime glass used for common window glass for automobiles, the thickness of a glass plate of laminated glass that is disposed on the vehicle exterior side is preferably 1.6 mm or more, and more preferably, 1.8 mm or more. Furthermore, the thickness of a glass plate disposed on the vehicle interior side is preferably less than 1.6 mm, more preferably, less than 1.3 mm, and particularly preferably, less than 1.1 mm. On the other hand, glass plates are preferably thicker than 0.7 mm because of easiness of handling and are preferably thicker than 1 mm because of high compatibility with existing production facilities of window glass for automobiles.

Furthermore, the difference in thickness between the thick plate and the thin plate is preferably 0.5 mm or more, and more preferably, 0.65 mm or more. This is because it is possible to reduce weight while ensuring strength and the flying stone performance.

Furthermore, the value of y is preferably $1.017 \leq y$, and more preferably, $1.02 \leq y$, and still more preferably, $1.03 \leq y$.

The laminated glass 60 may be vehicle window glass. The number of glass plates 12 and 14 that compose the laminated glass 60 may be two. The convex curved surface of the laminated glass 60 is formed by the convex curved surface of the thick glass plate 12. When this laminated glass 60 is attached to a vehicle, the thick glass plate 12 is disposed on the vehicle exterior side. Therefore, the laminated glass 60 is less likely to break when a flying object such as a small stone externally collides with automobiles.

According to the above-described embodiment, the laminated glass includes two glass plates. The laminated glass, however, may include three or more glass plates as long as two of the glass plates are different in thickness. In this case, the remaining glass plates other than the two glass plates may be different in thickness from both of the two glass plates or may be equal in thickness to one of the two glass plates. In the former case, in all combinations of two glass plates that are different in thickness, it is preferable that of the two glass plates, the thick glass plate have a lower viscosity than the thin glass plate at any temperature between the annealing point and the softening point of the thick glass plate. In the latter case, it is preferable that glass plates of the same thickness have the same glass viscosity.

The forming process includes a temperature distribution forming process of forming an uneven temperature distribution on the principal surfaces of each of the glass plates 12 and 14. In the case of placing and heating each of the glass plates 12 and 14 on the ring mold 20, an uneven temperature distribution is formed on each of the glass plates 12 and 14 when viewed from above. Each of the glass plates 12 and 14 may have an even temperature distribution in the thickness directions.

For example, as illustrated in FIG. 2 and FIG. 3, the temperature distribution forming process may form an uneven temperature distribution on the principal surfaces of each of the glass plates 12 and 14 with heat blocking members 22 provided between the glass plates 12 and 14 and the heating source H1.

The heat blocking members 22 may be fixed to the ring mold 20, and move inside the heating furnace 30 together with the ring mold 20. The heating sources H1 and H2 such as heaters are provided inside the heating furnace 30. The heating source H1 fixed to the hearth of the heating furnace 30 and the heating source H2 fixed to the ceiling of the heating furnace 30 apply heat to the glass plates 12 and 14 on the ring mold 20 from both above and below.

The heat blocking members 22 enter the heating furnace, when the temperature of the heat blocking members 22 is lower than the temperature inside the heating furnace. Then, the heat blocking members 22 are increased in temperature more moderately than the glass plates 12 and 14 placed on the ring mold 20, and the heat blocking members 22 exit the heating furnace 30, when the heat blocking members 22 are lower in temperature than the glass plates 12 and 14 placed on the ring mold 20. The heat blocking members 22 are formed of a material having heat resistance, and are formed of, for example, iron, stainless steel or the like.

For example, as illustrated in FIG. 2, the heat blocking members 22 may be disposed below the glass plates 12 and 14 placed on the ring mold 20, and absorb radiant heat from the heating source H1 fixed to the hearth of the heating furnace 30 so as to block the radiant heat from the heating source H1 to the glass plates 12 and 14. Alternatively, the heat blocking members 22 may be disposed above or on both sides of the glass plates 12 and 14 placed on the ring mold 20.

The heat blocking members 22 block the radiant heat from the heating source H1 to part of the glass plates 12 and 14. The part of the glass plates 12 and 14 to which the radiant heat from the heating source H1 is blocked increases in temperature more moderately than a part to which the radiant heat is not blocked. Accordingly, the part of the glass plates 12 and 14 to which the radiant heat from the heating source H1 is blocked is bent with the force of gravity in a shorter time than the part to which the radiant heat is not blocked. Therefore, each of the glass plates 12 and 14 is easily bendable in part and less likely to bend in part, so that it is possible to bend each of the glass plates 12 and 14 into a desired shape. Accordingly, it is possible to sufficiently bond glass plates and an interlayer by applying pressure in the pressure bonding process.

For example, as illustrated in FIG. 3, the heat blocking members 22 may suppress a temperature increase in at least part of peripheral parts of the glass plates 12 and 14, and may suppress a temperature increase in at least longitudinal end parts of the glass plates 12 and 14. When the glass plates 12 and 14 are for vehicles, the longitudinal directions of the glass plates 12 and 14 are generally the directions of vehicle width, but may be directions perpendicular to the directions of vehicle width depending on a vehicle type. It is possible to prevent unintentional bending deformation of the longitudinal end parts of the thin glass plate 4, so that it is possible to reduce the generation of the marks of irregularities of a release agent (deformation).

The heat blocking members 22 may block the radiant heat from the heating source H1 to the glass plates 12 and 14 in at least part of the forming process. The heat blocking members 22 may be movable between a heat blocking position (position illustrated in FIG. 2) where the heat blocking members 22 block the radiant heat from the heating source H1 to part of the glass plates 12 and 14 and a retreat position where a smaller amount of heat is blocked than at the heat blocking position.

According to the temperature distribution forming process of this embodiment, an uneven temperature distribution is formed on the principal surfaces of the glass plates 12 and 14 with the heat blocking members 22. Alternatively, an uneven temperature distribution may be formed on the principal surfaces of the glass plates 12 and 14 with heating sources h1 through h5 that apply heat to parts of the glass plates 12 and 14 as illustrated in FIG. 13.

For example, as illustrated in FIG. 13, the temperature distribution forming process may form an uneven temperature distribution on the principal surfaces of the glass plates 12 and 14 by individually controlling the heating sources h1 through h5 that simultaneously apply heat to the glass plates 12 and 14. The heating sources h1 through h5 may be arranged along the longitudinal directions of the glass plates 12 and 14. Furthermore, the temperature distribution forming process may form an uneven temperature distribution on the principal surfaces of the glass plates 12 and 14 by adjusting, with respect to each of the heating sources h1 through h5, the positional relationship between the heating sources h1 through h5 and the glass plates 12 and 14 to which the heating sources h1 through h5 simultaneously apply heat. For example, as illustrated in FIG. 13, the heating sources h1 through h5 are supported so as to be vertically movable inside the heating furnace 30 by a base 31 hung from the ceiling of the heating furnace 30. With the output of the heating sources h1 through h5 being the same, as the distance between the glass plates 12 and 14 and the heating sources h1 through h5 decreases, the parts of the glass plates 12 and 14 heated by the heating sources h1 through h5 increase in temperature.

The heating sources h1 through h5 of FIG. 13 are provided on the heating furnace 30 side. Alternatively, the heating sources h1 through h5 may be provided on the ring mold 20 side and may move inside the heating furnace 30 together with the ring mold 20.

The heating sources h1 through h5 of FIG. 13 may be used together with the heat blocking members 22 of FIG. 2.

With respect to the uneven temperature distribution, the vicinity of an area where the glass plates 12 and 14 greatly differ in shape, and an area where irregularities due to a release agent are likely to be transferred onto the thin glass plate, for example, the longitudinal end parts of the glass plates, may be locally made higher or lower in temperature than other parts. As a result, it is possible to prevent over-bending or under-bending of glass plates, so that it is possible to reduce failure of pressure bonding of glass plates and an interlayer and to reduce deformation due to the pressure of the contact of glass plates and a release agent.

[Examples]

[Example 1]

In Example 1, two glass plates (soda-lime glass) having a flat plate shape are prepared. The two glass plates are different in thickness. The thick glass plate is 2.0 mm in thickness, and the thin glass plate is 1.1 mm in thickness. Furthermore, the two glass plates are different in composition. As a result of studying the composition of each glass plate using X-ray fluorescence analysis, the thick glass plate presents a higher $Na_2O$ content than the thin glass plate.

Next, the viscosities at multiple temperatures are determined by the BB method illustrated in FIG. 8 using test pieces having the same compositions as the glass plates, and A, B and $T_0$ in Eq. (1), which is a model equation, are determined by the method of least squares so as to minimize a difference from Eq. (1). As a result, A is 1.525, B is 4144, and $T_0$ is 270.8 for the test piece having the same composition as the thick glass plate. Furthermore, A is 1.525, B is 4144, and $T_0$ is 290.8 for the test piece having the same composition as the thin glass plate. The combination of y and z calculated based on these combinations of A, B and $T_0$ is y = 1.921 and z = 1.056. By the way, x is 0.55.

Next, ink into which glass frit, a black heat-resisting pigment, and an organic vehicle are mixed is applied on a surface of the thin glass plate, and is dried to form a decoration material layer.

Next, the glass plate of 2.0 mm in thickness and the glass plate of 1.1 mm in thickness are placed one over the other in this order on the ring mold illustrated in FIG. 1 such that the decoration material layer is disposed on the upper surface of the thin glass plate. Before placing the two glass plates one over the other, a release agent containing ceramic powder is provided between the two glass plates.

Next, the ring mold on which the two glass plates are placed one over the other is moved from the entrance of a heating furnace to a forming zone through a pre-heating zone, so that the softened two glass plates are bent into a shape following the ring mold by the force of gravity and the decoration material layer is heated for removal of a binder and then is fired to form a decoration film. In the forming zone, heat blocking members are provided between the glass plates and a heating source as illustrated in FIG. 2 in order to form an uneven temperature distribution on the principal surfaces of each glass plate. The heat blocking members are fixed to the ring mold and moved together with the ring mold inside the heating furnace, so as to shield the longitudinal end parts of the glass plates placed on the ring mold from heat. In the forming zone, the convex curved surface of the bent thin glass plate and the concave curved surface of the bent thick glass plate face each other. Next, the ring mold is moved from the forming zone to an annealing zone, and is thereafter conveyed out from the exit of the heating furnace.

Thereafter, after being sufficiently cooled on the ring mold, the two glass plates are removed from the ring mold and are cleaned to remove the release agent, and the appearance of each glass plate is visually observed. As a result, the longitudinal end parts of the thin glass plate show no unintentional bending deformation, and no defects due to irregularities of the ceramic powder contained in the release agent are confirmed, so that there is no problem in visual quality.

Next, the two glass plate are stacked in layers with an interlayer formed of polyvinyl butyral (PVB) interposed between them, with the concave curved surface of the thick glass plate and the convex curved surface of the thin glass plate facing each other, so as to form a glass laminate (non-pressure-bonded body). The glass laminate is heated and pressure-bonded in an autoclave, so that laminated glass having a desired curved shape is obtained.

No failure of pressure bonding is found and no cracks are confirmed between the adjacent glass plates by visual observation of the obtained laminated glass.

[Example 2]

In Example 2, laminated glass is made in the same manner as in Example 1 except that the thin glass plate is 1.6 mm in thickness and the glass composition of the thin glass plate is changed.

Before the forming process, the viscosities at multiple temperatures are determined by the BB method illustrated in FIG. 8 using a test piece having the same composition as the thin glass plate of Example 2, and A, B and $T_0$ in Eq. (1), which is a model equation, are determined by the method of least squares so as to minimize a difference from Eq. (1). As a result, A is 1.525, B is 4144, and $T_0$ is 278.6 for the test piece having the same composition as the thin glass plate. The combination of y and z calculated based on this combination of A, B and $T_0$ is y = 1.826 and z = 1.022. By the way, x is 0.8.

After the forming process, after being sufficiently cooled on the ring mold, the two glass plates are removed from the ring mold and are cleaned to remove the release agent, and the appearance of each glass plate is visually observed. As a result, the longitudinal end parts of the thin glass plate show no unintentional bending deformation, and no defects due to irregularities of the ceramic powder contained in the release agent are confirmed, so that there is no problem in visual quality.

Furthermore, after the pressure bonding process, no failure of pressure bonding is found and no cracks are confirmed between the adjacent glass plates by visual observation of the obtained laminated glass.

[Example 3]

In Example 3, laminated glass is made in the same manner as in Example 1 except that the compositions of the thin glass plate and the thick glass plate are changed as in Table 3.

Before the forming process, the viscosities at multiple temperatures are determined by the BB method illustrated in FIG. 8 using test pieces having the same compositions as the thin glass plate and the thick glass plate of Example 3, and A, B and $T_0$ in Eq. (1), which is a model equation, are determined by the method of least squares so as to minimize a difference from Eq. (1). As a result, as described in Table 3, A is 2.158, B is 4791, and $T_0$ is 243.6 for the test piece having the same composition as the thin glass plate, and A is 1.617, B is 4230, and $T_0$ is 261.6 for the test piece having the same composition as the thick glass plate.

After the forming process, after being sufficiently cooled on the ring mold, the two glass plates are removed from the ring mold and are cleaned to remove the release agent, and the appearance of each glass plate is visually observed. As a result, the longitudinal end parts of the thin glass plate show no unintentional bending deformation, and no defects due to irregularities of the ceramic powder contained in the release agent are confirmed, so that there is no problem in visual quality.

Furthermore, after the pressure bonding process, no failure of pressure bonding is found and no cracks are confirmed between the adjacent glass plates by visual observation of the obtained laminated glass.

[Example 4]

In Example 4, laminated glass is made in the same manner as in Example 1 except that the compositions of the thin glass plate and the thick glass plate are changed as in Table 3.

Before the forming process, the viscosities at multiple temperatures are determined by the BB method illustrated in FIG. 8 using test pieces having the same compositions as the thin glass plate and the thick glass plate of Example 4, and A, B and $T_0$ in Eq. (1), which is a model equation, are determined by the method of least squares so as to minimize a difference from Eq. (1). As a result, as described in Table 3, A is 1.270, B is 4119, and $T_0$ is 274.3 for the test piece having the same composition as the thin glass plate, and A is -0.110, B is 2976, and $T_0$ is 312.0 for the test piece having the same composition as the thick glass plate.

After the forming process, after being sufficiently cooled on the ring mold, the two glass plates are removed from the ring mold and are cleaned to remove the release agent, and the appearance of each glass plate is visually observed. As a result, the longitudinal end parts of the thin glass plate show no unintentional bending deformation, and no defects due to irregularities of the ceramic powder contained in the release agent are confirmed, so that there is no problem in visual quality.

Furthermore, after the pressure bonding process, no failure of pressure bonding is found and no cracks are confirmed between the adjacent glass plates by visual observation of the obtained laminated glass.

Table 3

| (MASS%) | EXAMPLE 3 (EXAMPLE COMBINATION) | | EXAMPLE 4 (EXAMPLE COMBINATION) | |
|---|---|---|---|---|
| | THIN GLASS PLATE | THICK GLASS PLATE | THIN GLASS PLATE | THICK GLASS PLATE |
| $SiO_2$ | 72.2 | 73.0 | 71.7 | 73.3 |
| $Al_2O_3$ | 1.8 | 0.1 | 2.5 | 0.8 |
| CaO | 8.1 | 8.6 | 8.5 | 9.8 |
| MgO | 4.2 | 3.8 | 3.6 | 0.4 |
| $Na_2O$ | 12.9 | 13.7 | 12.3 | 14.0 |
| $K_2O$ | 0.6 | 0.1 | 1.0 | 0.6 |
| $Na_2O+K_2O$ | 13.5 | 13.8 | 13.3 | 14.6 |
| $TiO_2$ | 0.02 | 0.03 | 0.02 | 0.04 |
| $CeO_2$ | 0 | 0 | 0 | 0 |
| $Fe_2O_3$ | 0.08 | 0.57 | 0.08 | 0.86 |
| $SO_3$ | 0.1 | 0.1 | 0.3 | 0.2 |
| (total) | 100 | 100 | 100 | 100 |
| SOFTENING POINT (°C) | 734.6 | 720.5 | 738.7 | 709.4 |
| ANNEALING POINT (°C) | 549.6 | 541.5 | 553.2 | 534.1 |
| STRAIN POINT (°C) | 504.6 | 499 | 510.1 | 497 |
| A | 2.158 | 1.617 | 1.270 | -0.110 |
| B | 4791 | 4230 | 4119 | 2976 |
| $T_0$ | 243.6 | 261.6 | 274.3 | 312.0 |

[Comparative Example 1]

In Comparative Example 1, laminated glass is made in the same manner as in Example 1 except that the glass composition of the thin glass plate is changed to be the same as the glass composition of the thick glass plate.

After the forming process, after being sufficiently cooled on the ring mold, the two glass plates are removed from the ring mold and are cleaned to remove the release agent, and the appearance of each glass plate is visually observed. As a result, unintentional bending deformation is observed in the longitudinal end parts of the thin glass plate. Furthermore, defects due to irregularities of the ceramic powder contained in the release agent are observed, and perspective distortion is found.

Furthermore, after the pressure bonding process, failure of pressure bonding is found and cracks are confirmed between the adjacent glass plates by visual observation of the obtained laminated glass.

A description is given above of embodiments of a laminated glass production method, etc., but the present invention is not limited to the above-described embodiments, etc., and variations and modifications may be made within the gist described in the scope of claims.

The present application is based upon and claims the benefit of priority of Japanese Patent Application No. 2012-220711, filed on October 2, 2012, the entire contents of which are incorporated herein by reference.

DESCRIPTION OF THE REFERENCE NUMERALS

| | |
|---|---|
| 2 | thick glass plate |
| 4 | thin glass plate |
| 8 | functional material layer |
| 12 | bent thick glass plate |
| 14 | bent thin glass plate |
| 18 | functional film |
| 20 | ring mold |
| 40 | interlayer |
| 50 | glass laminate (non-pressure-bonded body) |
| 60 | laminated glass |

**Claims**

1. A laminated glass production method, comprising:

   a forming step of bending a plurality of glass plates into a desired shape by heating the plurality of glass plates to near a softening point;
   a lamination step of stacking the plurality of bent glass plates in layers with an interlayer interposed therebetween; and
   a pressure bonding step of forming a laminated glass by bonding the glass plates and the interlayer stacked in layers by applying pressure,
   wherein at least two glass plates of the plurality of glass plates composing the laminated glass have different thicknesses,
   a thicker glass plate of the two glass plates having different thicknesses has a viscosity lower than a viscosity of a thinner glass plate of the two glass plates at a temperature between an annealing point and a softening point of the thicker glass plate, and
   said forming step includes a temperature distribution forming step of forming an uneven temperature distribution on a principal surface of each of the glass plates.

2. The laminated glass production method as claimed in claim 1, wherein said temperature distribution forming step forms the uneven temperature distribution on the principal surfaces of the glass plates with a heat blocking member provided between the glass plates and a heating source.

3. The laminated glass production method as claimed in claim 1 or 2, wherein said temperature distribution forming step forms the uneven temperature distribution on the principal surfaces of the glass plates with a heating source that applies heat to a part of the glass plates.

4. The laminated glass production method as claimed in claim 3, wherein said temperature distribution forming step forms the uneven temperature distribution on the principal surfaces of the glass plates by individually controlling a plurality of heating sources that simultaneously applies heat to the glass plates.

5. The laminated glass production method as claimed in claim 3 or 4, wherein said temperature distribution forming step forms the uneven temperature distribution on the principal surfaces of the glass plates by adjusting a positional relationship between a plurality of heating sources and the glass plates to which the plurality of heating sources simultaneously applies heat with respect to each of the heating sources.

6. The laminated glass production method as claimed in any of claims 1 to 5, wherein said forming step is a step of bending the plurality of glass plates into the desired shape by placing the plurality of glass plates stacked in layers with a release agent interposed therebetween on a ring mold and heating the plurality of glass plates to near the softening point.

7. The laminated glass production method as claimed in any of claims 1 to 6, wherein the two glass plates having the different thicknesses have different glass compositions.

8. The laminated glass production method as claimed in any of claims 1 to 7, wherein
letting a ratio of the thickness ($t_1$) of the thicker glass plate and the thickness ($t_2$) of the thinner glass plate at room temperature be x ($x = t_2/t_1$),
letting a ratio of a logarithm ($\log_{10}\eta_1$) of a viscosity ($\eta_1$) of the thicker glass plate and a logarithm ($\log_{10}\eta_2$) of a viscosity ($\eta_2$) of the thinner glass plate at the annealing point of the thicker glass plate be y ($y = \log_{10}\eta_2/\log_{10}\eta_1$), and
letting a ratio of a logarithm ($\log_{10}\eta_3$) of a viscosity ($\eta_3$) of the thicker glass plate and a logarithm ($\log_{10}\eta_4$) of a viscosity ($\eta_4$) of the thinner glass plate at the softening point of the thicker glass plate be z ($z = \log_{10}\eta_4/\log_{10}\eta_3$.
the two glass plates having the different thicknesses satisfy an expression of $1 < y < (1.22 - 0.206 \times x)$ and an expression of $1 < z < (1.15 - 0.131 \times x)$.

9. The laminated glass production method as claimed in claim 8, wherein the two glass plates having the different thicknesses satisfy an expression of $0.3 \leq x \leq 0.9$.

10. The laminated glass production method as claimed in claim 8 or 9, wherein the two glass plates having the different thicknesses satisfy an expression of $1.017 \leq y$.

11. The laminated glass production method as claimed in any of claims 1 to 10, wherein the laminated glass is vehicle window glass, a number of glass plates composing the laminated glass is two, and a convex curved surface of the laminated glass is formed by a convex curved surface of the thicker glass plate.

12. The laminated glass production method as claimed in any of claims 1 to 11, wherein

    when expressed as converted to oxides,
    the thinner glass plate is a soda-lime glass plate having a composition including

       0 mass% to 3.5 mass% of $Al_2O_3$, and
       12.0 mass% to 14.5 mass% of $Na_2O$ and $K_2O$ in total, and

    the thicker glass plate is a soda-lime glass plate having a composition including

       0 mass% to 2.0 mass% of $Al_2O_3$, and
       13.0 mass% to 15.5 mass% of $Na_2O$ and $K_2O$ in total.

13. The laminated glass production method as claimed in any of claims 1 to 12, wherein

    when expressed as converted to oxides,
    the thinner glass plate has a composition including

       68.0 mass% to 75.0 mass% of $SiO_2$,
       0 mass% to 3.5 mass% of $Al_2O_3$,
       7.0 mass% to 13.0 mass% of CaO,
       0 mass% to 7.0 mass% of MgO,
       12.0 mass% to 15.0 mass% of $Na_2O$
       0 mass% to 3.0 mass% of $K_2O$, and
       12.0 mass% to 14.5 mass% of $Na_2O$ and $K_2O$ in total, and

    the thicker glass plate has a composition including

       68.0 mass% to 75.0 mass% of $SiO_2$,
       0 mass% to 2.0 mass% of $Al_2O_3$,
       7.0 mass% to 13.0 mass% of CaO,
       0 mass% to 7.0 mass% of MgO,
       12.0 mass% to 15.0 mass% of $Na_2$
       0 mass% to 3.0 mass% of $K_2O$, and
       13.0 mass% to 15.5 mass% of $Na_2O$ and $K_2O$ in total.

14. The laminated glass production method as claimed in any of claims 1 to 13, wherein a $\beta$-OH value ($mm^{-1}$) is 0.1 to 0.4.

**15.** Laminated glass obtained by the laminated glass production method as claimed in any of claims 1 to 14.

# FIG.1

EP 2 905 267 A1

# FIG.2

30    H    H2

34

14
12
20
22                            22

III

H1

# FIG.3

14,12

22                            22

# FIG.4

18
14
40
12

$t_2$

$t_1$

18

# FIG.5

50

18
14
40
12

18

# FIG.6

60

18
14
40
12

18

# FIG.7

# FIG.8

## FIG.9

$y\left(y=\dfrac{\log_{10}\eta_2}{\log_{10}\eta_1}\right)$ vs $x\left(x=\dfrac{t_2}{t_1}\right)$

$y=1.20-0.206x$

## FIG.10

$z\left(z=\dfrac{\log_{10}\eta_4}{\log_{10}\eta_3}\right)$ vs $x\left(x=\dfrac{t_2}{t_1}\right)$

$z=1.13-0.131x$

## FIG.11

## FIG.12

# FIG.13

# FIG.14

## INTERNATIONAL SEARCH REPORT

| International application No. |
| --- |
| PCT/JP2013/075761 |

**A. CLASSIFICATION OF SUBJECT MATTER**
*C03C27/12*(2006.01)i, *C03C3/087*(2006.01)i

According to International Patent Classification (IPC) or to both national classification and IPC

**B. FIELDS SEARCHED**

Minimum documentation searched (classification system followed by classification symbols)
C03C27/12, C03C3/087

Documentation searched other than minimum documentation to the extent that such documents are included in the fields searched
Jitsuyo Shinan Koho       1922–1996   Jitsuyo Shinan Toroku Koho   1996–2013
Kokai Jitsuyo Shinan Koho  1971–2013   Toroku Jitsuyo Shinan Koho   1994–2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 57-61646 A  (Societa Italiana Vetro -SIV-<br>S.p.A.),<br>14 April 1982 (14.04.1982),<br>claims; example 2; fig. 1<br>& GB 2078169 A        & DE 3124067 A<br>& FR 2484398 A        & IT 1131319 B | 15<br>1-7,11-14<br>8-10 |
| Y | JP 2001-89172 A  (Asahi Glass Co., Ltd.),<br>03 April 2001 (03.04.2001),<br>claims; paragraphs [0001] to [0005]; fig. 8<br>& US 7331198 B1        & EP 1140713 A<br>& WO 2001/023310 A1 | 1-7,11-14 |

| ☒  Further documents are listed in the continuation of Box C. | ☐  See patent family annex. |
| --- | --- |

\*    Special categories of cited documents:
"A"   document defining the general state of the art which is not considered    to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after  the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>    11 October, 2013 (11.10.13) | Date of mailing of the international search report<br>    29 October, 2013 (29.10.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2013/075761 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 62-265138 A (PPG Industries, Inc.), 18 November 1987 (18.11.1987), claims<br>& US 4687501 A          & FR 2597469 A<br>& CA 1275568 A          & IT 1203930 B | 1-7,11-14 |
| Y | JP 2004-137147 A (Nippon Sheet Glass Co., Ltd.), 13 May 2004 (13.05.2004), claims; examples<br>& US 2004/0067835 A1    & EP 1403224 A1 | 12,13 |
| Y | WO 2007/111079 A1 (Asahi Glass Co., Ltd.), 04 October 2007 (04.10.2007), examples; claims<br>& US 2009/0000335 A1    & EP 2000440 A2<br>& KR 10-2008-0113192 A  & CN 101410333 A | 12-14 |
| P,X | WO 2012/137742 A1 (Asahi Glass Co., Ltd.), 11 October 2012 (11.10.2012), claims<br>(Family: none) | 15 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003055007 A
- JP 2012220711 A